# EUROPÄISCHE PATENTSCHRIFT

(11) **EP 4 146 951 B1**
(45) Veröffentlichungstag und Bekanntmachung des Hinweises auf die Patenterteilung: **10.07.2024**
(21) Anmeldenummer: 21745231.7
(22) Anmeldetag: 04.05.2021
(51) Int. Cl.: F16C 19/38, F16C 37/00

(54) **KOMPAKTE ROLLENLAGEREINHEIT MIT DIREKTANTRIEB FUER RUNDTISCHE MIT HOCHGENAUEN PLAN-/RUNDLAUF**
COMPACT ROLLER BEARING UNIT HAVING A DIRECT DRIVE FOR ROTARY TABLES WITH HIGH-PRECISION AXIAL/RADIAL RUNOUT
ENSEMBLE ROULEMENT À ROULEAUX COMPACT À ENTRAÎNEMENT DIRECT POUR TABLES RONDES PRÉSENTANT UN FAUX-ROND DE ROTATION ET UN BATTEMENT AXIAL TRÈS PRÉCIS

(30) Priorität: 04.05.2020 DE 102020112010
(43) Veröffentlichungstag der Anmeldung: 15.03.2023
(73) Patentinhaber: Gäbel, Ullrich, 75305 Neuenbürg (DE)
(72) Erfinder: Gäbel, Ullrich, 75305 Neuenbürg (DE)
(74) Vertreter: Drechsler, Gottfried
(86) Internationale Anmeldenummer: PCT/DE2021/100404
(87) Internationale Veröffentlichungsnummer: WO 2021/223809

(56) Entgegenhaltungen:
- EP-A1- 1 992 829
- WO-A1-2017/059857
- DE-A1- 102012 206 667
- DE-U1- 202010 009 404

## Beschreibung

Die Erfindung betrifft eine kompakte Rollenlagereinheit mit Direktantrieb für Rundtische mit hochgenauen Plan-/Rundlauf mit zentrischer Führung der Zylinderrollen und hochgenauer Ausrichtung der Zylinderrollen.

Solcherart Axial - Radialrollenlager für hochgenaue Rundtische werden benötigt zu einer sehr präzisen und achszentrierten Lagerung von Direktantrieben mit fliegend gelagerten Rotoren, deren Abtriebswelle keine Pulsationen oder thermische Drift im Nanometerbereich erzeugen. Insbesondere für Werkzeugmaschinen, wie zum Beispiel für Linsenschleifmaschinen in der optischen Industrie oder als Winkelmesstische in der Metrologie. Bekannte Rundtischlager sind als achssymmetrische Lager mit Laufringen für die Zylinderrollen aufgebaut. In der technischen Lösung gemäß der DE 10 2008 017 457 A1 ist ein entsprechendes Axial - Radialrollenlager für Rundtische beschrieben. Es ist aufgebaut aus einem Innenringteil, welches den eigentlichen Rundtisch trägt und mit diesen verbunden ist. Das zugehörige Außenringteil ist mit einem Grundgestell verbunden und mit einem axial wirkenden Dämpfungselement gekoppelt. Die Dämpfung wirkt nur in einer Lastrichtung. Das Innenringteil ist im Querschnitt U-förmig ausgebildet. Das Außenringteil greift in das Innenringteil ein und stützt sich beidseitig über jeweils ein Axiallager ab. Sowohl Innenringteil als auch Außenringteil sind beide über ein Radiallager in radialer Richtung drehgelagert. Das Axial- und das Radiallager selbst sind dabei als Zylinderrollenlager ausgebildet. Diese Lageranordnung soll sowohl die angreifenden Axial- und Radiallasten als auch die jeweilig anliegenden Kippmomente aufnehmen. Obwohl beide Lager spielfrei und definiert vorgespannt sind, sind sie für hochgenaue Rundtische im Nanometerbereich nur bedingt geeignet. Die Einbauteile, wie Welle und Gehäuse beeinflussen die Genauigkeit und Steifigkeit des Lagers im Nanometerbereich. Es entstehen Fügestellen und Verschraubungsebenen, die sich alle zusammen negativ auf den Planlauf und die Rechtwinkligkeit des Lagers auswirken. Im Betrieb ändert sich deshalb die Laufgenauigkeit des Lagers, d. h. der Rund - und Planlauf, sowie die Taumelbewegung der Abtriebswelle nimmt zu. Bei längerer Betriebsdauer mit höheren Drehzahlen, insbesondere bei Betrieb mit einem Direktantrieb wird das thermische Verhalten des Axial - Radiallagers entscheidend für dessen Laufgenauigkeit. Durch die unterschiedliche Erwärmung des Innenringes und des Außenringes werden die radialen und axialen Laufflächen unterschiedlich verändert. Infolge der thermisch bedingten unterschiedlichen Ausdehnung ändert sich auch die Vorspannung undefinierbar. Diese sich ändernde Vorspannung führt zur Welligkeit der axialen Laufflächen im Nanometerbereich und zur Laufpulsation der Zylinderrollen, im Extremfall sogar zum frühzeitigen Lagerausfall. Zwar kann das thermische Verhalten verbessert werden, indem zum Beispiel eine effektive Ölumlaufkühlung eingesetzt wird, aber dies ist mit erheblichem zusätzlichem Aufwand verbunden. Außerdem leidet dadurch die Einsatzbreite solcherart Lager.

Es gibt auch weitere technische Lösungen für hochgenaue Rundtischlager, welche aus zwei kombinierten Axialschrägkugellagern bestehen. Hier sind am Innenring und am Außenring entsprechende Laufbahngeometrien angeordnet, auf denen die Kugeln abrollen und die jeweils einen Druckwinkel von 60° aufweisen. Diese Art Wälzlager haben zwar den Vorteil, dass sie höher vorgespannt werden können und im Erwärmungsfall zu geringeren Ausdehnungen der beiden Lagerringe führen. Insgesamt besitzen solche Lager allerdings eine geringere Axial/Radialsteifigkeit und daraus folgend auch eine geringere Kippsteifigkeit. Für hochgenaue Rundtischlager im Nanometerbereich sind sie deshalb ebenfalls nicht hinreichend geeignet. Der mögliche Einlauf der Wälzkörper in die Kugelbahnen kann zu einem Vorspannungsverlust und einer Genauigkeitsreduzierung führen. Im allgemeinem sind derartige Kugellager nicht crashsicher und für den Einsatz im Nanometerbereich daher nicht geeignet. Durch die fehlende Crashsicherheit und die eingeschränkte Lebensdauer sind kugelgelagerte Rundtischlager nur bedingt verfügbar.

Aus der DE 10 2012 221 725 A1 ist ein weiteres Rundtischlager bekannt, bei dem das Innenringteil und das Außenringteil über zwei sich im Druckwinkel unterscheidende Wälzlager gelagert sind. Hierbei handelt es sich in der Regel um ein Axialrollenlager und ein Schrägkontaktlager. Dabei ist das Axiallager bevorzugt als Zylinderrollenlager ausgeführt. Der Vorteil dieser Bauweise besteht darin, dass eine etwaige Durchmesserveränderung des Innenringes und des Außenringes, insbesondere bedingt durch eine unterschiedliche Erwärmung beider Bauteile nicht unmittelbar eine identische Vorspannungsänderung bewirkt. Allerdings ist auch diese Bauweise für die gewünschte Hochgenauigkeit im Nanometerbereich nicht geeignet. Die einzelnen Lageringe und Fügestellen schwächen den Lagerverbund. Sie erzeugen Nachgiebigkeiten und Welligkeiten der Lageringe an den Verschraubungsstellen und sind damit für den Einsatz im Nanometerbereich in der Regel nicht geeignet. Die radialen Kugellaufbahnen dieser Rundtischlager sind im schmalen Kontaktbereich nicht dauerhaft crashsicher und schränken daher die Lebensdauer ein. Eine Fertigung der Kontaktradien der Kugellaufbahn im Nanometerbereich zur axialen Rollenlaufbahn mit axialer Bordführung begrenzt momentane Fertigungsmöglichkeiten im Nanometerbereich erheblich. Das beschriebene Rundtischlager aus Rollen und Kugellaufbahn erfüllt deshalb nur Einsatzbereiche im Mikrometerbereich innerhalb weniger Tausendstel Millimeter.

In der DE 10 2012 206 667 B4 ist ein Axial-Radiallager offenbart, bei dem ein zweiseitig wirkendes Axiallager und ein radiales Führungslager zur Lagerung einer direkt angetrieben Achse eines Maschinentisches, insbesondere einer Werkzeugmaschine beschrieben sind. Dabei ist ein zweigeteilter Innenring gegenüber einem drehbaren Außenring angeordnet und in dem Innenring sind radial verteilt zwei radial umlaufende Reihen von Bohrungen zur Befestigung des Innenringes auf einem Maschinentisch ausgebildet. Durch die vielfache in zwei umlaufenden Reihen direkt auf dem Maschinentisch erfolgende Verschraubung des Innenringes soll eine besonders hohe Axial- und Kippsteifigkeit erreicht werden. Allerdings ist diese Lagerausführung nicht für Lagerungen mit Genauigkeiten unterhalb einem Mikrometer geeignet.

DE 20 2010 009 404 U beschreibt eine Lagereinrichtung für drehende Elemente, wie Wellen, Spindeln, Drehtische bzw. Rundschalttische, welche ein Drehteil aufweisen, das mittels einer Lagervorrichtung in Bezug auf ein Gehäuse um eine Achse drehbar gelagert ist, wobei die Lagervorrichtung aus zwei L-förmigen Ringteilen besteht, welche einen inneren Gehäusering mit drei Lagerlaufbahnen bilden und in ein Gehäuse und in ein umgreifendes Wellenteil eingeschraubt sind. Durch die Anordnung und Verwendung von relativ kurzen Laufringen, die sich weniger durchbiegen können, werden erhöhte Steifigkeit und Genauigkeit erreicht. Durch das Vorhandensein verschiedener Fügestellen ist diese Lagereinrichtung jedoch nicht besonders geeignet, um eine Genauigkeit bis in den Nanometerbereich zu erreichen.

Der Erfindung liegt die Aufgabe zu Grunde, ein kompakt bauende Rollenlagereinheit mit Direktantrieb für Rundtische mit hochgenauen Plan-/Rundlauf zu schaffen, welche an der Abtriebsachse sowohl das Fertigen als auch das Messen mit der gleichen Abtriebswelle ermöglicht, dabei Genauigkeiten bis 50 nm und kleiner realisiert, in einem breiten Drehzahlbereich eine exakte Führung bei minimalem Verschleiß ermöglicht, auftretende Kantenpressung auf der Rolle weitgehend vermeidet, die Erwärmung der kritischen Bereiche im Betrieb verringert, höhere Drehzahlen ermöglicht und dessen Lebensdauer verlängert ist.

Die Erfindung wird mit den Merkmalen des ersten Patentanspruches gelöst. Weitere vorteilhafte Ausgestaltungen sind in den rückbezüglichen Unteransprüchen beschrieben. Die kompakte Rollenlagereinheit 1 ist mit einem Direktantrieb 6 zum Antrieb eines Rundtisches verbunden. Die Rollenlagereinheit 1 mit hochgenauen Plan-/Rundlauf im Nanometerbereich ist insbesondere zur Aufnahme von Axial - und Radiallasten ausgelegt. Erfindungsgemäß ist die Welle 8 über radiale und axiale Zylinderrollenreihen 3, 4 direkt in einem Lagergehäusering 11 des Rundtischlagers ohne Laufringe geführt. Sie ist konstruktiv so ausgebildet, dass nur eine axiale Fügestellenfläche 15 im Gesamtsystem angeordnet ist. Die Rollenlagereinheit 1 besitzt bevorzugt nur eine innere und eine äußere integrierte radiale Zylinderrollenreihe 3 und je eine innere und eine äußere axiale Zylinderrollenreihe 4, wobei zwei örtlich getrennten Paare von einer radialen und einer axialen Zylinderrollenreihe 3, 4 ausgebildet sind. Der axiale Abstand der Paare der Zylinderrollenreihen 3, 4 ist von der Drehzahl- und Kippbelastung des Komplettlagers abhängig. Dieser variable Abstand wird von der Breite des feststehenden Gehäuselageringes a und der axialen Wellenflanschlänge b bestimmt. Die axiale Anlagescheibe 13 stellt die einzige Fügestellenfläche 15 der Rollenlagereinheit 1 dar. Die beiden Teile des Gesamtsystems, die Anlagescheibe 13 und die Welle 8 sind über radial verteilt angeordnete Lagerverschraubungen 14 fest verschraubt, so dass diese an der Fügestellenfläche 15 unverrückbar aufeinander liegen. Es besteht Formschluss am Innendurchmesser der Anlagescheibe 13 und Welle 8. Diese Rollenlagereinheit 1 bildet eine fertig montierte, kompakt bauende Einheit aus wenigen Einzelteilen, in welche als solche unmittelbar eine integrierte Wasserkühlung 9 verbaut werden kann. Die erfindungsgemäß vorgeschlagene Rollenlagergeometrie als integrierte Lagerung ohne Laufringe und sonstige Fügestellen erfüllt die Anforderungen der nanometergenauen Fertigung von Planflächen ohne Laufringe mit Form- und Lageabweichungen bzw. Rechtwinkligkeiten im Nanometerbereich. Die Reduzierung der Fügestellen gegenüber den bisher bekannten technischen Lösungen auf eine einzige Fügestelle hat den Vorteil, dass damit Montageungenauigkeiten beim Zusammenbau weitestgehend vermieden werden.

Für hochgenaue kompakte Rollenlagereinheiten 1 ist es von erheblichem Vorteil, dass im oder am Lagergehäusering 11 eine Wasserkühlung 9 angeordnet und eingebaut ist. Für spezielle Anwendungen zum Beispiel nur in der Metrologie, kann die Rollenlagereinheit 1 in der Regel gegebenenfalls auch ohne Wasserkühlung eingesetzt werden. Denn die kleineren Drehzahlen führen nur zu einer geringen gleichmäßigen Erwärmung des Gesamtsystems ohne Lagerverzug im Nanometerbereich.

Um eine weitere Genauigkeitssteigerung zu erzielen oder größeren Rollenlagerdurchmesser bei der kompakten Rollenlagereinheit 1 herzustellen, kann es sinnvoll sein, wenn die axiale Zylinderrollenreihe 4 nicht nur einreihig, sondern zweireihig oder mehrreihig im Zylinderrollenreihenpaar 5 ausgebildet ist, wobei die einzelnen Zylinderrollenreihen örtlich und thermisch voneinander getrennt angeordnet sind, zudem symmetrisch voneinander beabstandet angeordnet sind und mittig zur Wasserkühlung 9 den gleichen Abstand haben.

Durch eine bestimmte Anordnung zueinander, kann die kompakte Rollenlagereinheit 1 so ausgelegt werden, dass die Rollenanordnung der radialen und axialen Zylinderrollen 2 einen Art Torsionsrahmen bilden, der die Kantenpressung aller Zylinderrollen 2 mit reduzierten Fügestellen einschränkt oder zumindest weitgehend vermeidet.

Von erheblichen Vorteil ist es, wenn bei der kompakte Rollenlagereinheit 1 die einzelnen Zylinderrollen 2 nach einem hochgenauen Ausmessvorgang jeder einzelnen Zylinderrolle 2, diese nach ihrem Durchmesser größenmäßig selektiert sind und die selektierten Zylinderrollen 2 bei minimaler Vorspannung am Umfang der Welle 8 radial und axial symmetrisch in sehr engen Toleranzbereichen einsortiert angeordnet sind.

Erfindungsgemäß sind nach ihrem Durchmesser selektierte Zylinderrollen 2 in einem bestimmten Schema nach einer optimierten Durchmesserabstufung so in den Zylinderrollenreihen 3, 4 abgestuft und sortiert verteilt angeordnet, so dass diese während des Betriebes eine aktive Dämpfungskette bewirken. Die Fertigung von Lagerteilen, wie der Welle, des Gehäuses und Zylinderrollen im Nanometergenauigkeitsbereich, der neuartigen Form des Lageraufbaus und den geringen Lagertoleranzen ermöglichen eine neue Lagertechnologie mit minimalen Rollenvorspannungen, welche im Weiteren auch eine neue aktive Lagerdämpfung realisieren. Diese hochgenaue Fertigung der einzelnen Lagerteile, jeweils jedes ohne weitere Fügestellen und der Anwendung einer minimalen Rollenvorspannung von ca. 200 oder bist zu oder kleiner/gleich 500 Nanometer. Eingesetzt werden hierfür selektierte Zylinderrollen mit einer Durchmesserabstufung im Bereich zwischen 50 bis 100 Nanometer. Das entspricht einem Verhältnis von Vorspannung zur Durchmesserdifferenz der Zylinderrollen von 10 zu 1. Jede Zylinderrolle 2 trägt im Rollenlager die gleiche Belastung. Zur aktiven Dämpfung wird die Durchmesserdifferenz im Nanometerbereich genutzt, indem die Rollen in Abhängigkeit von ihrem Durchmesser symmetrisch genau sortiert und abgestuft in die Rollenkränze 16 nach einem neuartigen Sortierschema axial und radial in der Rollenlagereinheit 1 eingelegt werden. Durch eine gestaffelte Einfederung jeder Zylinderrolle 2 im Nanometerbereich in die Laufbahnoberflächen werden eingeleitete angeregte Schwingungsamplituden weitgehend abgeschwächt. Damit kann die Abtriebsgenauigkeit in dem gewünschten Bereich über einen längere Betriebsdauer als bisher gewährleistet werden.

Die Erfindung soll nachstehend in einem Ausführungsbeispiel an Hand der Figuren 1 bis 3 näher beschrieben werden.
- Fig. 1: zeigt eine Rollenlagereinheit 1 mit einer axialen Zylinderrollenreihe 4
- Fig. 2: zeigt eine Rollenlagereinheit 1 mit zwei paarigen axialen Zylinderrollenreihen 4
- Fig. 3: zeigt eine komplette Rollenlagereinheit 1 mit gekoppelten linearen Direktantrieb 6

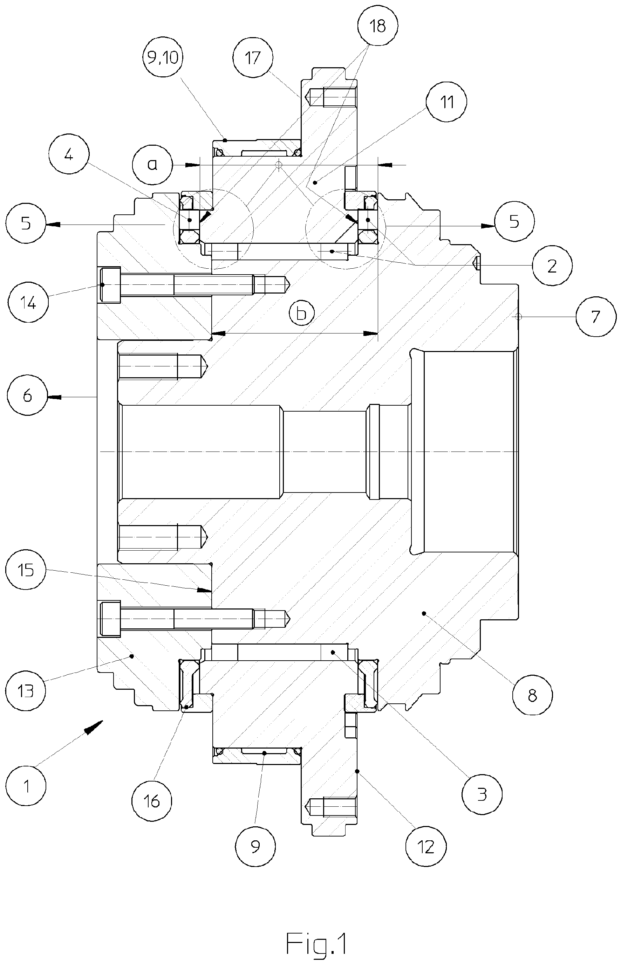

In der **Fig.** 1 ist eine Rollenlagereinheit 1 mit einem inneren und einem äußeren Zylinderrollenreihenpaar 5 mit je einer axialen Zylinderrollenreihe 4 und je einer radialen Zylinderrollenreihe 3 gezeigt. Das innere Zylinderrollenreihenpaar 5 ist hin zum Direktantrieb 6 angeordnet, während das äußere Zylinderrollenpaar 5 in Richtung der Abtriebswelle 7 angeordnet ist. Der Direktantrieb 6 ist mit einem extrem steifen Gehäuse ausgestattet. Es handelt sich dabei vorzugsweise um einen Synchronmotor. Die Zylinderrollen 2 der beiden radialen Zylinderrollenreihen 3 rollen direkt auf einer abgesetzten Mantelfläche, d. h. einem Wellenflansch der Welle 8 ab. Diese Mantelfläche mit der Wellenflanschlänge b ist entsprechend genau geschliffen, die Laufbahnoberfläche ist entsprechend vergütet, von extrem präziser Rundlaufgenauigkeit und minimaler Zylinderabweichung, so dass die Abweichung vom Kreis von kleiner/gleich 50 Nanometer entsteht. Die einzelnen Zylinderrollen 2 sind mit einer Durchmessergenauigkeit von 20 bis 50 Nanometer genau gefertigt und zusätzlich selektiert nach einem bestimmten Schema unter definierter Vorspannung eingebaut. Die Durchmessergenauigkeit wird erreicht, indem die vorgefertigten Zylinderrollen 2 einem speziellen Läppverfahren unterzogen werden. Diese Zylinderrollen 2 sind danach mit einem vergrößerten Mittenbereich hochgenau ausgebildet. Durch einen steifen Torsionskastenaufbau kann die Kantenpressung reduziert werden. Die einzelnen Zylinderrollen 2 sind in einem Rollenkranz 16 eingelegt, werden durch diesen voneinander beabstandet und durch geeignete Bordführungen geführt. Abtriebswellenseitig stützt sich die äußere radiale Zylinderrollenreihe 3 an einer angeordneten Wellenschulter ab. Je größer der Abstand der beiden radialen Zylinderrollenreihen 3 voneinander ist d. h. je größer die axiale Wellenflanschlänge b ist, umso höher ist die Kippsteifigkeit der gesamten Rollenlagereinheit 1. Durch geeignete Dimensionierungen der Wellenflanschlänge b der Welle 8 und der Breite a des feststehenden Lagergehäuseringes 11 kann die Kippsteifigkeit deshalb in Abhängigkeit vom jeweiligen Anwendungsfall vorher festgelegt werden. Bevorzugt sind die axialen Zylinderrollen 2 so weit wie möglich voneinander entfernt auf den axialen Planflächen des Lagergehäuseringes 11 angeordnet. Damit sind die tragenden Zylinderrollen 2 der radialen Zylinderrollenreihen 3 in den axialen Endbereichen des Lagergehäuseringes 11 angeordnet und mittels diesen beiden weit voneinander beabstandeten radialen Zylinderrollenreihen 3 ist der Lagergehäusering 11 radial extrem kippsteif gelagert. Im oder außen am Lagergehäusering 11 ist eine geeignete Wasserkühlung 9 angeordnet. Hier in diesem Fall ist beispielsweise ein Wärmekühlring 10 auf der äußeren Mantelfläche des Lagergehäuseringes 11 abgedichtet angeordnet. Aber die Wasserkühlung 9 kann bei Bedarf auch durch geeignete im Inneren des Lagergehäuseringes angeordnete Kühlkanäle realisiert werden. Dies ist vor allem bei größeren Lagerdurchmessen vorteilhaft. Am Lagergehäusering 11 ist ein überstehender Lagergehäusebund 17 ausgebildet, mit welchem dann die komplette Rollenlagereinheit 1 auf einem Rundtisch mit seiner Befestigungsfläche 12 aufgelegt und befestigt (vorzugsweise verschraubt) werden kann.

Axial ist der Lagergehäusering 11 mit einem inneren axialen Zylinderrollenreihe 4 und einer äußeren axialen Zylinderrollenreihe 4 gelagert und geführt. Die einzelnen axialen Zylinderrollen 2 sind wieder in je einem Rollenkranz 16 eingelegt, werden durch diesen voneinander beabstandet und durch geeignete Bordführungen fixiert und geführt. Die innere axiale Zylinderrollenreihe 4 ist direkt auf einer Ringfläche einer Anlagescheibe 13 und einem Lagerflansch 18 des Lagergehäuseringes 11 gelagert und geführt. Das äußere Zylinderrollenlager 4 ist direkt auf einer Ringfläche eines Wellenbundes und einer Ringfläche des Lagerflanschs 18 gelagert und geführt. Diese Ringflächen dienen jeweils als Abrollfläche der Axiallager, d. h. der Zylinderrollenreihe 4 mit entsprechend genau gefertigten Zylinderrollen 2. Im Prinzip ist auch eine Ausführung mit Kegelrollen anstelle von Zylinderrollen 2 möglich. Die Abrollflächen sind entsprechend genau geläppt, die Laufbahnoberfläche ist entsprechend vergütet, von extremer Rundheit und hochgenau bearbeitet, so dass eine Abweichung vom Kreis von kleiner 50 Nanometer entsteht. An der Anlagescheibe 13 ist axial eine Fügestellenfläche 15 genau rechtwinklig zur Symmetrieachse angeordnet. Auf diese Fügestellenfläche 15 wird die rückseitige Wellenfläche der Welle 8 aufgelegt und die beiden Teile, Anlagescheibe 13 und Welle 8 werden zur Rollenlagereinheit 1 mit der Lagerverschraubung 14 miteinander verschraubt, wobei der Lagergehäusering 11 mit seinen Lagern axial vorgespannt wird.

Auf diese Art und Weise ist nur eine einzige Fügestellenfläche 15 in der Rollenlagereinheit 1 angeordnet. Das besondere dieser Konstruktion sind die beiden aufeinander abgestimmten Zylinderrollenreihenpaare 5. Diese gewährleisten einen gleichen Traganteil der Zylinderrollen 2 und können mit exakt definierter Vorspannung, nach einem symmetrischen Einsortierungsschema eingebaut werden. Durch die Einsortierung der hochgenauen Zylinderrollen 2 nach einer bestimmten Abstufung der Rollendurchmesser jeder Zylinderrolle 2 in die Rollenkränze 16 entsteht eine aktive Dämpfungskette, welche die Laufruhe, die Laufgenauigkeit und die Lebensdauer eines solchen Rollenlagereinheit 1 erheblich verbessert. Im Ergebnis entstehen Restpulsationen von unter 2 Nanometern, d. h. es erfolgt eine Tilgung der eingetragenen Anregungsamplitude. Realisiert werden können Kippsteifigkeiten für die neuartige Rollenlagereinheit 1 kombiniert mit einem entsprechend geeigneten Direktantrieb 6 von 50 000 bis 200 000 Newtonmeter/mrad.

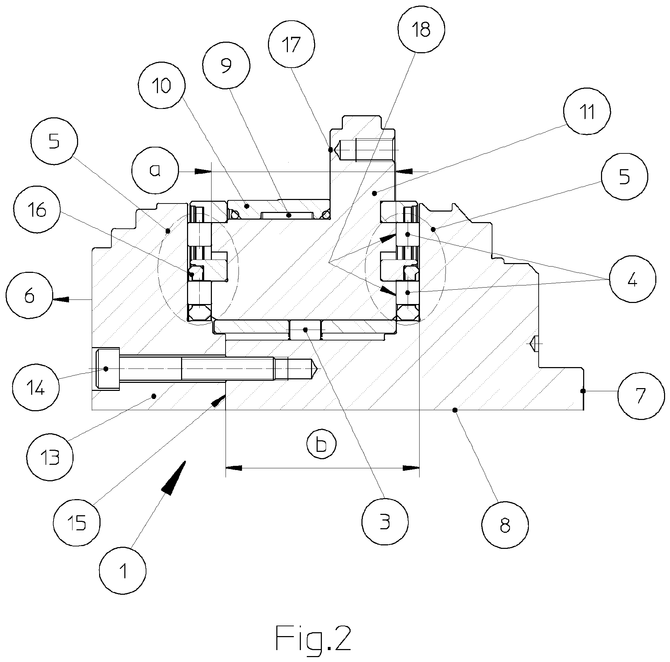

In der Fig. 2 ist eine Rollenlagereinheit 2 als Ausführungsbeispiel mit zwei eng voneinander beabstandeten axialen Zylinderrollenreihen 4 gezeigt. Das Zylinderrollenreihenpaar 5 besteht dann aus zwei paarig angeordneten axialen Zylinderrollenreihen 4 und einer mittig auf der Wellenflanschlänge b angeordneten radialen Zylinderrollenreihe 3. Auch hier sind alle einzeln eingebauten Zylinderrollen 2 in ihren Durchmessern entsprechend sortiert und in einer bestimmten Abstufung zueinander eingebaut um wiederum eine bestimmte Dämpfungskette zu erreichen. Durch die zwei paarig angeordneten axialen Zylinderrollenreihen 4 lässt sich die Kippsteifigkeit und die axiale Tragfähigkeit noch einmal verbessern. Insbesondere ist diese aufwändigere Ausbildung dieser Rollenlagereinheit 1 für größere Rollenlager mit Gesamtdurchmessern über 300 mm geeignet. Im Prinzip können in Abhängigkeit von der Baugröße auch noch weitere axiale Zylinderrollenreihen 4 nebeneinander angeordnet werden. Auch können zwei radiale Zylinderrollenreihen 3 voneinander beabstandet ausgebildet werden. Dies ermöglich noch erheblich größere Rollenlagerdurchmesser mit größeren bewegten Massen und die Beherrschung auch von höheren in das Rollenlager eingeleiteten axialen Bearbeitungskräften, welche von den zu bearbeitenden Werkstücken ausgehen können. Auch können hier zusätzlich noch geeignete Messsysteme problemlos angebaut, in die Rollenlagereinheit wahlweise integriert oder aufgesetzt werden. Im Ergebnis entsteht eine universelle Rollenlagereinheit 1, mit der in einer einzigen Aufspannung sowohl hochgenau gefertigt als auch gleichzeitig hochpräzise gemessen werden kann.

Der Rollenlageraufbau gemäß Fig. 2 ist weitgehend identisch mit dem Aufbau gemäß der Figur 1. Die radiale Zylinderrollenreihe 3 ist genau mittig zu den beiden axialen Zylinderrollenreihen 4 auf der abgesetzten Mantelfläche, d. h. einem Wellenflansch der Welle 8 angeordnet. Diese Mantelfläche ist analog genau gefertigt. Die einzelnen Zylinderrollen 2 sind mit gleicher Durchmessergenauigkeit von 20 bis 50 Nanometer genau gefertigt und zusätzlich selektiert eingebaut. Diese Zylinderrollen 2 besitzen auch einen dreifach größeren Traganteil gegenüber herkömmlichen Zylinderrollen. Die Zylinderrollen 2 sind in je einem Rollenkranz 16 geführt und werden durch diesen voneinander beabstandet. Die paarigen axialen Zylinderrollenreihen 4 sind so weit wie möglich voneinander entfernt, d. h. die Ränder der Laufflächen sind so weit voneinander beabstandet, dass dieser Abstand der Breite a des Lagergehäuseringes 11 entspricht. Im oder außen am Lagergehäusering 11 ist eine geeignete Wasserkühlung 9 angeordnet. Auch hier ist beispielsweise ein Wärmekühlring 10 auf der äußeren Mantelfläche des Lagergehäuseringes 11 abgedichtet. Am Lagergehäusering 11 ist der überstehende Lagergehäusebund 17 ausgebildet, mit welchem dann die Rollenlagereinheit 1 auf einem Rundtisch mit seiner Befestigungsfläche 12 angelegt und befestigt (vorzugsweise verschraubt) werden kann.

Axial ist der Lagergehäusering 11 mit zwei paarigen inneren axialen Zylinderrollenreihen 4 und zwei paarigen äußeren axialen Zylinderrollenreihe 4 gelagert und geführt. Dazu ist der Lagerflansch 18 des Lagergehäuseringes 11 in seiner radialen Höhe vergrößert, auf denen die paarigen axialen Zylinderrollenreihen 4 abrollen. Zwischen den paarigen axialen Zylinderrollenreihen 4 sind jeweils nur eine oder bei größerem Abstand zwei voneinander beabstandete Bordführungen zur Führung der Zylinderrollen 2 angeordnet. Die einzelnen axialen Zylinderrollen 2 sind wieder in je einem Rollenkranz 16 geführt und werden durch diesen voneinander beabstandet. Die inneren paarigen axialen Zylinderrollenreihen 4 sind direkt auf einer Ringfläche der Anlagescheibe 13 gelagert und geführt. Die äußeren paarigen axialen Zylinderrollenlager 4 sind direkt auf der Ringfläche eines breiteren Wellenbundes der Welle 8 gelagert und geführt. Diese Ringflächen dienen jeweils als Abrollfläche der vier Axiallager. Die Abrollflächen sind entsprechend genau geläppt, die Laufbahnoberfläche ist entsprechend vergütet, von extremer Ebenheit und hochgenau bearbeitet, so dass eine Ebenheit von kleiner 20 Nanometer entsteht. An der Anlagescheibe 13 ist axial die Fügestellenfläche genau rechtwinklig zur Symmetrieachse angeordnet. Auf diese Fügestellenfläche 15 wird die rückseitige Wellenfläche der Welle 8 aufgelegt und die beiden Teile Anlagescheibe 13 und Welle 8 werden zur Rollenlagereinheit 1 mit der Lagerverschraubung 14 miteinanderverschraubt, wobei der gelagerte Lagergehäusering 11 mit seinen Lagern festmontiert und vorspannbar ausgeführt ist. Auch hier ist nur eine einzige Fügestellenfläche 15 wie in der Rollenlagereinheit 1 angeordnet. Das besondere dieser Konstruktion sind die beiden aufeinander abgestimmten Zylinderrollenreihenpaare 5, hier bestehend aus je zwei aufeinander abgestimmten axialen Lagern. Diese gewährleisten ebenfalls zuverlässig einen gleichen Traganteil der eingebauten Zylinderrollen 2 und können alle mit definierter Vorspannung eingebaut werden. Durch die Einsortierung aller hochgenauen Zylinderrollen 2 nach einer bestimmten symmetrischen Abstufung der Rollendurchmesser jeder Zylinderrolle 2 in die fünf Rollenkränze entsteht wiederum eine spezifische aktive Dämpfungskette, welche die Laufruhe, die Laufgenauigkeit und die Lebensdauer eines solchen Rollenlagereinheit 1 weiter erheblich verbessert. Im Ergebnis entstehen auch hier Restpulsationen von unter 2 Nanometern. Realisiert werden können mit dieser Ausführung noch höhere Kippsteifigkeiten und axiale Traglasten für die Rollenlagereinheit 1 kombiniert mit einem entsprechend geeigneten Direktantrieb 6.

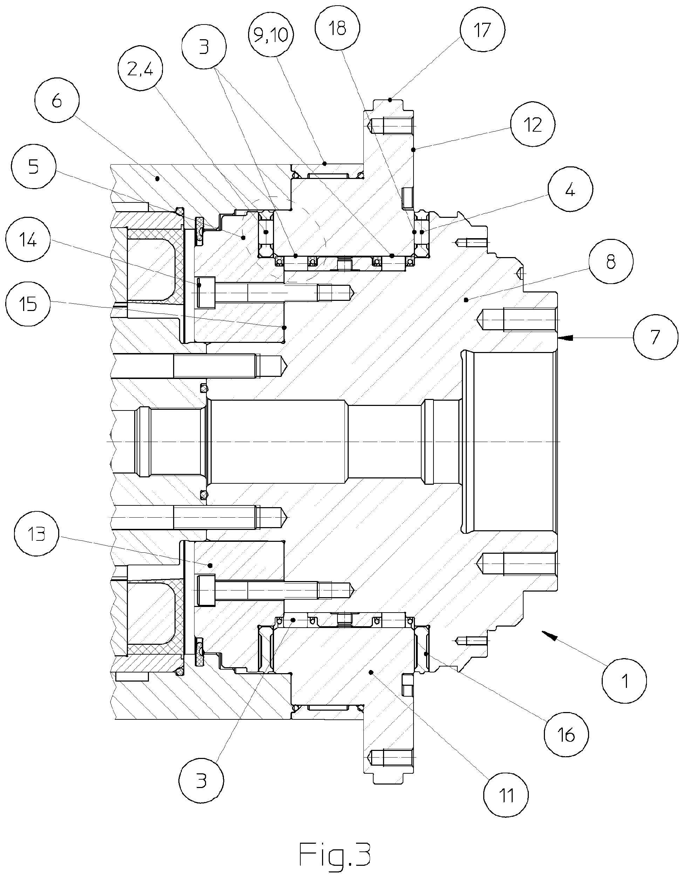

In der Fig. 3 ist eine komplette Rollenlagereinheit 1 mit gekoppelten Synchrondirektantrieb 6 und einer anschließbaren Abtriebswelle 7 im Zusammenbau abgebildet. Hier ist wieder ein ähnlicher Rollenlageraufbau, wie in der Fig. 1 gezeigt. Es sind ein inneres und ein äußeres Zylinderrollenreihenpaar 5 mit je einer axialen Zylinderrollenreihe 4 und je einer radialen Zylinderrollenreihe 3 gezeichnet. Das innere Zylinderrollenreihenpaar 5 ist hin zum Direktantrieb 6 angeordnet, während das äußere Zylinderrollenreihenpaar 5 in Richtung der Abtriebswelle 7 angeordnet ist. Die Zylinderrollen 2 der beiden radialen Zylinderrollenreihen 3 rollen direkt auf dem Wellenflansch der Welle 8 ab. Die einzelnen Zylinderrollen 2 sind mit einer Durchmessergenauigkeit von 20 bis 50 Nanometer genau gefertigt und selektiert nach einem bestimmten Schema unter definierter Vorspannung eingebaut. Dabei ist die Konstruktion so ausgelegt, das ein steifer Torsionskastenaufbau entsteht wobei die Kantenpressung der Zylinderrollen 2 reduziert wird. Die einzelnen Zylinderrollen 2 sind Rollenkränze 16 eingelegt, werden durch diese voneinander beabstandet und durch geeignete Bordführungen geführt.

Abtriebswellenseitig stützt sich die äußere radiale Zylinderrollenreihe 3 an einer angeordneten Wellenschulter ab. Direktantriebsseitig stützt sich die innere Zylinderrollenreihe 3 an einer Anlagenscheibenschulter ab. Außen am Lagergehäusering 11 ist die Wasserkühlung 9 angeordnet. Hier ist ein einfacher Wärmekühlring 10 auf der äußeren Mantelfläche des Lagergehäuseringes 11 abgedichtet aufgezogen. Am Lagergehäusering 11 ist ein überstehender Lagergehäusebund 17 ausgebildet, mit welchem die komplette Rollenlagereinheit 1 auf einem Rundtisch mit einem Abdeck- und Montagering mit seiner Befestigungsfläche 12 aufgelegt und verschraubt ausgebildet ist.

Axial ist der Lagergehäusering 11 mit einem inneren axialen Zylinderrollenreihe 4 und einer äußeren axialen Zylinderrollenreihe 4 gelagert und geführt. Die einzelnen axialen Zylinderrollen 2 sind in je einem Rollenkranz 16 eingelegt, werden durch diesen voneinander beabstandet und durch geeignete Bordführungen innenbordseitig auf der Welle geführt. Die innere axiale Zylinderrollenreihe 4 ist direkt auf einer Ringfläche einer Anlagescheibe 13 und einem Lagerflansch 19 des Lagergehäuseringes 11 gelagert und geführt. Das äußere Zylinderrollenlager 4 ist direkt auf einer Ringfläche eines Wellenbundes und einer Ringfläche des Lagerflanschs 18 gelagert und geführt. Diese Ringflächen dienen jeweils als Abrollfläche der Axiallager, d. h. der Zylinderrollenreihe 4 mit entsprechend genau gefertigten Zylinderrollen 2. An der Anlagescheibe 13 ist axial die Fügestellenfläche 15 genau rechtwinklig zur Symmetrieachse angeordnet. Auf diese Fügestellenfläche 15 ist die rückseitige Wellenfläche der Welle 8 aufgelegt und die beiden Teile, Anlagescheibe 13 und Welle 8 werden zur Rollenlagereinheit 1 mit der Lagerverschraubung 14 miteinander verschraubt, wobei der Lagergehäusering 11 mit seinen Lagern axial vorgespannt wird. Auf diese Art und Weise ist nur eine einzige Fügestellenfläche 15 in der Rollenlagereinheit 1 angeordnet.

Die erfindungsgemäße kompakt bauende Rollenlagereinheit 1 mit Direktantrieb ist einsetzbar für Rundtische mit hochgenauen Plan-/Rundlauf im Nanometerbereich zur Aufnahme von Axial - und Radiallasten, insbesondere in der Schleifbearbeitung und der Metrologie.

### Bezugszeichenliste

- 1: Rollenlagereinheit
- 2: Zylinderrolle
- 3: Zylinderrollenreihe radial
- 4: Zylinderrollenreihe axial
- 5: Zylinderrollenreihenpaar
- 6: Direktantrieb
- 7: Abtriebswelle
- 8: Welle
- 9: Wasserkühlung
- 10: Wärmekühlring
- 11: Lagergehäusering
- 12: Befestigungsfläche
- 13: Anlagescheibe
- 14: Lagerverschraubung
- 15: Fügestellenfläche
- 16: Rollenkranz
- 17: Lagergehäusebund
- 18: Lagerflansch des Lagergehäuseringes

- a: Breite des feststehenden Lagergehäuseringes
- b: Wellenflanschlänge

## Patentansprüche

1. Kompakte Rollenlagereinheit (1) mit Direktantrieb für Rundtische mit hochgenauen Plan-/Rundlauf im Nanometerbereich zur Aufnahme von Axial - und Radiallasten,
wobei
eine Welle (8) über radiale und axiale Zylinderrollenreihen (3, 4) als Zylinderrollenreihenpaare (5) direkt in einem Lagergehäusering (11) der Rollenlagereinheit (1) ohne Laufringe gelagert und geführt ist,
nur eine axiale Fügestellenfläche (15) in der Rollenlagereinheit (1) angeordnet ist,
die Zylinderrollen (2) nach ihrem Durchmesser selektiert sind, und die selektierten Zylinderrollen (2) in einer bestimmten Durchmesserabstufung so in den Zylinderrollenreihen (3, 4) verteilt angeordnet sind,
dass diese eine Dämpfungskette bewirken.

2. Kompakte Rollenlagereinheit (1) nach Anspruch 1,
**dadurch gekennzeichnet,**
**dass** im oder am Lagergehäusering (11) eine Wasserkühlung (10) angeordnet ist.

3. Kompakte Rollenlagereinheit (1) nach Anspruch 1 und 2,
**dadurch gekennzeichnet,**
**dass** die axiale Zylinderrollenreihen (4) einreihig, zweireihig oder mehrreihig angeordnet sind,
dann mit der radialen Zylinderrollenreihe (3) je ein aufeinander abgestimmtes Zylinderrollenreihenpaar (5) ausgebildet ist,
diese örtlich und thermisch voneinander getrennt angeordnet sind,
symmetrisch voneinander beabstandet angeordnet sind
und mittig zur Wasserkühlung (9) den gleichen Abstand haben.

4. Kompakte Rollenlagereinheit (1) nach Anspruch 1,
**dadurch gekennzeichnet,**
**dass** die Rollenanordnung der radialen und axialen Zylinderrollen (2) einen Torsionsrahmen bilden,
der die Kantenpressung der Zylinderrollen (2) mit reduzierten Fügestellen einschränkt oder vermeidet.

5. Kompakte Rollenlagereinheit (1) nach Anspruch 1 oder 3,
**dadurch gekennzeichnet,**
**dass** die selektierten Zylinderrollen (2) bei minimaler Vorspannung am Umfang der Welle (8) radial und axial symmetrisch nach einem bestimmten Schema einsortiert angeordnet sind.

6. Kompakte Rollenlagereinheit (1) nach Anspruch 1 oder 3,
**dadurch gekennzeichnet,**
**dass** die selektierten Zylinderrollen mit einer Durchmessergenauigkeit von 20 bis 50 Nanometer und einen dreifach größeren Traganteil genau gefertigt sind und zusätzlich selektiert nach einem bestimmten Schema unter definierter Vorspannung eingebaut sind.

## Claims

1. A compact roller bearing unit (1) including a direct drive for rotary tables with highly precise axial/radial run-out in the nanometre range for taking up axial and radial loads,
wherein
a shaft (8) is supported and guided directly in a bearing housing ring (11) of the roller bearing unit (1) without raceways via radial and axial rows (3, 4) of cylindrical rollers arranged in pairs (5) of rows of cylindrical rollers,
only one axial joining point area (15) is arranged in the roller bearing unit (1),
the cylindrical rollers (2) are selected by their diameter,
the selected cylindrical rollers (2) are arranged distributed in the rows (3, 4) of cylindrical rollers according to a specific gradation of diameters
such that they act as a damping chain.

2. The compact roller bearing unit (1) according to claim 1,
**characterized in that**
a water-cooling unit (9) is arranged in or on the bearing housing ring (11).

3. The compact roller bearing unit (1) according to claims 1 and 2,
**characterized in that**
the axial rows (4) of cylindrical rollers are arranged in one row, two rows or multiple rows, they then form a coordinated pair (5) of cylindrical rollers together with the radial row (3) of cylindrical rollers,
these are arranged separate from each other locally and thermally,
these are arranged symmetrically spaced from each other
and have the same distance to the water-cooling unit (9) in the centre.

4. The compact roller bearing unit (1) according to claim 1,
**characterized in that**
the roller arrangement of the radial and axial cylindrical rollers (2) forms a torsion frame, which restricts or avoids edge pressure on the cylindrical rollers (2) by reduced joining points.

5. The compact roller bearing unit (1) according to claim 1 or 3,
**characterized in that**
the selected cylindrical rollers (2) are arranged under minimal preload on the circumference of the shaft (8) in a radially and axially symmetrical manner according to a specific scheme.

6. The compact roller bearing unit (1) according to claim 1 or 3,
**characterized in that**
the selected cylindrical rollers are precision-manufactured with a diameter precision of 20 to 50 nanometres and a tripled contact area ratio and are additionally built in under a defined preload and selected according to a specific scheme.

## Revendications

1. Unité de roulement à rouleaux (1) compacte à entraînement direct pour tables rotatives ayant une concentricité et planéité à l'échelle nanométrique et destinées à recevoir des charges axiales et radiales,
dans laquelle
un arbre (8) est monté et guidé directement dans un cercle de logement de roulement (11) de l'unité de roulement à rouleaux (1) sans bagues de roulement, au moyen de rangées radiales et axiales (3, 4) de rouleaux cylindriques (3, 4) disposées par paires (5) de rangées de rouleaux cylindriques,
une seule face de jointure (15) axiale est disposée dans l'unité de roulement à rouleaux (1), les rouleaux cylindriques (2) sont sélectionnés selon leur diamètre,
les rouleaux cylindriques (2) sélectionnés sont répartis dans les rangées (3, 4) de rouleaux cylindriques selon une gradation de diamètres spécifique de telle sorte
que ceux-ci produisent l'effet d'une chaîne d'amortissement.

2. Unité de roulement à rouleaux (1) compacte selon la revendication 1,
**caractérisée en ce que**
un refroidissement par eau (9) est disposé dans ou sur le cercle de logement de roulement (11).

3. Unité de roulement à rouleaux (1) compacte selon les revendications 1 et 2,
**caractérisée en ce que**
les rangées axiales (4) de rouleaux cylindriques sont disposées en une rangée, deux rangées ou plusieurs rangées,
ensemble avec la rangée radiale (3) de rouleaux cylindriques, chacune forme une paire (5) coordonnée de rangées de rouleaux cylindriques,
celles-ci sont disposées localement et thermiquement séparées les unes des autres,
celles-ci sont espacées les unes des autres de manière symétrique
et se trouvent à distance égale du refroidissement par eau (9).

4. Unité de roulement à rouleaux (1) compacte selon la revendication 1,
**caractérisée en ce que**
l'agencement des rouleaux cylindriques (2) radiaux et axiaux forme un cadre de torsion,
qui réduit ou évite les charges de bord sur les rouleaux cylindriques (2) par les jointures réduites.

5. Unité de roulement à rouleaux (1) compacte selon la revendication 1 ou 3,
**caractérisée en ce que**
les rouleaux cylindriques (2) sélectionnés sont disposés sur la circonférence de l'arbre (8) sous une précontrainte minimale d'une manière radialement et axialement symétrique et classée selon un schéma spécifique.

6. Unité de roulement à rouleaux (1) compacte selon la revendication 1 ou 3,
**caractérisée en ce que**
les rouleaux cylindriques sélectionnés sont usinés avec précision avec une exactitude de diamètre de 20 à 50 nanomètres et un taux de longueur portante triplé et, additionnellement, sont montés sous une précontrainte définie et sélectionnés selon un schéma spécifique.
